# NEUE EUROPÄISCHE PATENTSCHRIFT

(11) **EP 0 331 207 B2**
(45) Veröffentlichungstag und Bekanntmachung des Hinweises auf die Entscheidung über den Einspruch: **15.02.1995**
(45) Hinweis auf die Patenterteilung: 04.12.1991
(21) Anmeldenummer: 89104803.5
(22) Anmeldetag: 17.03.1989
(51) Int. Cl.: B01J 2/20, A23P 1/14, B30B 15/00, C11B 1/04

(54) **Verfahren zum Pelletieren**
Process for pelletising
Procédé pour la production de boulettes

(30) Priorität: 27.04.1988 DE 3814272; 25.01.1989 DE 3902171
(43) Veröffentlichungstag der Anmeldung: 06.09.1989
(73) Patentinhaber: Amandus Kahl Nachf. (GmbH & Co.), D-21465 Reinbek (DE)
(72) Erfinder: Behrmann,Joachim, D-2057 Reinbek (DE)
(74) Vertreter: Glawe, Delfs, Moll & Partner

(56) Entgegenhaltungen:
- EP-A- 0 212 391
- DE-A- 3 544 298
- FR-A- 651 699
- GB-A- 2 064 574
- US-A- 3 695 891
- US-A- 3 765 319
- US-A- 3 914 455
- US-A- 4 696 634

## Beschreibung

Die Erfindung betrifft ein Verfahren zum Pelletieren von Futtermitteln, bei dem das zu pelletierende Material oder Materialgemisch vor dem Pelletieren in einem Reaktionsbehälter bei erhöhter Temperatur konditioniert wird gemäß Oberbegriff des Anspruchs 1.

Es ist bekannt, daß staub-, pulverförmige und ähnliche Substanzen durch Pelletieren in leichter zu lagernde und besser zu verwendende Formen übergeführt werden können. Zu diesem Zweck wird das Ursprungsmaterial durch Bohrungen in Matrizen gedrückt, wobei es der Bewegung durch Reibung einen Widerstand entgegensetzt, so daß das Material verdichtet wird. Nach dem Hindurchtreten werden die so erzeugten Stränge dann durch sich relativ zur Matrize bewegende Messer auf gewünschte Längen abgeschnitten, so daß man Pellets erhält. Auf diese Weise können z.B. mehlförmige und pulverförmige Materialien, die man an Tiere nur unter Inkaufnahme von Nachteilen verfüttern kann, zu Pellets verarbeitet werden, die als Futtermittel vorteilhafte Verwendung finden können.

Vor dem Pelletieren wird häufig eine Konditionierung vorgenommen. Wesentlicher Zweck der Konditionierung ist die positive Beeinflussung der physiologischen Eigenschaften des Futters bzw. von dessen Komponenten, also der Verdaulichkeit durch die Tiere. Auch damit der Pelletierungsvorgang erfolgreich ist, muß meistens vorher eine Konditionierung vorgenommen werden, die maßgebend den Verdichtungsvorgang, die Preßfähigkeit der Komponenten, die Festigkeit der Pellets und damit die Qualität des Futters beeinflußt (IFF-Report Nr. 1 "Das Pelletieren von Mischfutter", herausgegeben vom Forschungsinstitut Futtermitteltechnik der Internationalen Forschungsgemeinschaft Futtermitteltechnik e.V. (IFF), Frickenmühle, 3300 Braunschweig-Thune).

Mit der Konditionierung oder Vorbereitung sollen unterschiedliche Rohwarenfeuchtigkeiten in der Mischung ausgeglichen werden, die Elastizität der Teilchen soll verbessert werden, der Widerstand bei der Formgebung (Verdichtung) soll verringert werden, es sollen Haftkräfte durch Feuchtigkeits brücken aufgebaut werden, die Stärke soll teilweise modifiziert werden, es sollen Klebeeigenschaften mobilisiert werden.

Die entsprechende Konditionierung, die auch bei anderen Materialien als Futtermitteln durchgeführt wird, besteht meistens in einer Erwärmung und einer Zugabe von Feuchtigkeit. Bei der sogenannten Kurzzeitkonditionierung liegt die Durchlaufzeit des Materials durch die Konditioniereinrichtung normalerweise unter einer Minute ; die Konditionierung erfolgt dabei z.B. in einer Mischschnecke. Bei der Langzeitkonditionierung erfolgt die Mischung vorher, die Konditionierung erfolgt dann in einem größeren Behälter, in dem das Material relativ wenig bewegt wird. Die Verweilzeit bei der Langzeitkonditionierung beträgt mindestens 10 Minuten, kann aber auch ein Vielfaches davon ausmachen. Anschließend wird dann häufig noch vor dem Einführen in die Pelletpresse eine Kurzzeitkonditionierung durchgeführt.

In allen diesen Fällen herrscht während des Konditioniervorganges im wesentlichen Atmosphärendruck. Selbst wenn das Material physisch durch Schneckenpressen oder dergleichen zusammengepreßt wird, steht das Material immer noch mehr oder weniger ungehindert mit der umgebenden Atmosphäre in Verbindung.

Ein weiterer Nachteil einiger der vorbekannten Konditionierer besteht darin, daß der Durchsatz durch den Konditionierer nicht ohne weiteres an wechselnde Arbeitsgeschwindigkeiten der Pelletpresse angepaßt werden kann. So müßte bei plötzlich höherer Leistung der Pelletpresse auch die Durchsatzgeschwindigkeit durch den Konditionierer erhöht werden, was eine geringere Verweilzeit des Materials in demselben zur Folge hat. Diese geringere Verweilzeit kann dann aber nicht ohne weiteres durch höhere Temperaturen oder Feuchtigkeiten ausgeglichen werden, da z.B. bei erhöhter Dampfzugabe derselbe teilweise entweichen würde, bevor er in das Material eindringen oder mit demselben in Wechselwirkung treten kann.

Es ist zwar bekannt, das Material bei den Drücken und Temperaturen des Konditionierers zu formen. Bei einem solchen Verfahren (FR-A-651699) wird allerdings auf eine spezielle Presse verzichtet ; das Formen der Stränge geschieht vielmehr in den Kanälen, in denen auch der höhere Druck und die höhere Temperatur herrscht. Die Erzeugnisse haben eine unregelmäßige Form, da sie nach dem Formungsvorgang noch auf Normaldruck gebracht werden und dabei expandieren.

Ahnliche Verhältnisse bestehen bei einem Verfahren der eingangs genannten Art (US-A-4,696,634). Bei diesem Verfahren muß das Brikettieren bei erhöhtem Druck und erhöhter Temperatur durchgeführt werden, damit sich die gebildeten Nahrungsmitteltabletten oder-briketts anschließend in der Form expandieren und aus der Form herausspringen. Dieses Verfahren hat verschiedene Nachteile.
1. Es ist technisch aufwendig, da auch die Brikettiereinrichtung unter erhöhtem Druck gehalten werden muß.
2. Aufgrund der Tatsache, daß die Konstruktion aufwendig ist, kann offenbar nur mit verhältnismäßig geringen Drücken und verhältnismäßig niedrigen Temperaturen gearbeitet werden, die den niedrigen Drücken entsprechen. So ist in der Entgegenhaltung von einer Temperatur von 240°F (115,6°C) in Spalte 2, Zeile 34 die Rede. Bei diesen niedrigen Temperaturen können nicht alle Konditionierfunktionen (z.B. Abtötung von Keimen usw.) in vernünftiger Zeit erzielt werden. Es sollte daher eine Konditionierung auch bei höheren Temperaturen möglich sein.
3. Da die fertig geformten Teilchen noch expandieren, haben sie keine gut definierte Größe.

Die Aufgabe der Erfindung besteht in der Schaffung eines Verfahrens, das einfacher durchzuführen ist und Pellets mit genauer definierten Abmessungen liefert.

Die erfindungsgemäße Lösung besteht darin, daß das Konditionieren bei Temperaturen von bis zu 170°C, insbesondere 150°C durchgeführt wird, und daß das Pelletieren nach Entspannen auf Atmosphärendruck in einer Pelletpresse erfolgt.

Das Material wird im Reaktionsbehälter durch das Förderelement, z.B. über eine Förder- oder Preßschnecke, so komprimiert, daß sich ein Materialpfropfen bildet. Aus diesem Materialpfropfen kann eingeschlossener Dampf, der entweder von außen zugeführt wird oder aufgrund der eingeschlossenen Feuchtigkeit durch Erhitzung entsteht, nicht oder nur schwer entweichen. Auf diese Weise kann dieser Dampfdruck Werte annehmen, die unter Umständen beträchtlich höher als der Atmosphärendruck sind. Das Material kann daher hier eine Temperatur annehmen, die wesentlich höher ist als 100°C, ohne daß der Reaktionsbehälter hermetisch abgeschlossen sein müßte, was den kontinuierlichen Transport von Material durch diesen Behälter behindern oder unmöglich machen würde. Es können dabei ohne weiteres Temperaturen von 170°C, insbesondere bis zu 150°C erreicht werden. Vorteilhafterweise wird das Konditionieren bei Temperaturen von ca. 120°C durchgeführt.

Die nötige Wärme kann von außen durch Erwärmung des Reaktionsbehälters von außen, durch Heizeinrichtungen im Reaktionsbehälter, durch die Reibungswärme beim Fördern und/oder dadurch erreicht werden, daß dem Material im komprimierten Bereich ein unter Druck stehendes gasförmiges oder flüssiges Fluid, insbesondere Wasserdampf zugeführt wird.

Zweckmäßigerweise beträgt der Feuchtigkeitsanteil des Materials beim Konditionieren ca. 10 bis 30 Gewichtsprozent.

Im komprimierten Bereich hat das Material einen im wesentlichen konstanten Druck

Lediglich am Ausgang des Behälters findet eine Entspannung des Druckes statt, der auf das dort befindliche Material wirkt. Der auf das Material wirkende Druck wird also nur bei dem Material verringert, das das Reaktionsgerät verlaßt oder verlassen hat, während die Drücke im Reaktionsbehälter die ursprünglichen Werte behalten, so daß das Verfahren kontinuierlich arbeitet. Erst anschließend findet das Pelletieren statt.

Bei einer besonders einfachen Ausführungsform wird ein Reaktionsbehälter mit einer oder mehreren Austrittsöffnungen mit konstantem Querschnitt verwendet. Die Austrittsöffnung könnte zum Beispiel eine Austrittsöffnung eines Extruders mit verhältnismäßig geringem Querschnitt sein, so daß sich hier durch die Materialförderung am Ausgang der Pfropf bildet, der es trotz kontinuierlicher Arbeitsweise ermöglicht, das Material hier auf erhöhtem Druck und damit erhöhter Temperatur zu halten.

Die Austrittsöffnungen können, falls mehrere gewünscht sind, die Bohrungen einer Matrize sein, aus denen das Material bei einem Extruder austritt

Wenn ein Reaktionsbehälter mit einer oder mehreren Austrittsöffnungen mit variablem Querschnitt verwendet wird, so kann gleichzeitig der Konditioniervorgang optimal an die Arbeitsgeschwindigkeit der Pelletpresse und/oder an sonstige Arbeitsparameter angepaßt werden. Solche Parameter sind die Stromaufnahme des Antriebs der Presse, die Temperatur, der Expansionsgrad, die Pelletqualität oder andere Parameter.

Selbstverständlich kann aber auch dann, wenn der Austrittsquerschnitt nicht verändert werden kann, wie zum Beispiel bei einem normalen Extruder, eine Steuerung oder Regelung der Pelletqualität durch Variation anderer Parameter erreicht werden.

Der Austrittsquerschnitt kann entweder von Hand eingestellt oder automatisch geregelt werden, wobei die automatische Regelung in Abhängigkeit von den genannten Parametern oder anderen Parametern erfolgen kann.

Bei einer weiteren vorteilhaften Ausführungsform wird ein sogenannter Expander verwendet.

Ein solcher Expander ist in anderem Zusammenhang bekanntgeworden (DE-PS 3529229, DE-OS 3544298), so daß auf die Einzelheiten dieses Expanders nicht näher eingegangen werden muß. Der Inhalt der genannten Offenlegungsschrift, die den Expander beschreibt, wird hiermit ausdrücklich zum Teil der Offenbarung der vorliegenden Patentanmeldung gemacht.

Der vorbekannte Expander dient anderen Zwecken, nämlich z.B. der Vorbereitung von Olsaaten und Olfrüchten für die Extraktion von Speiseöl. Der Expander soll dabei auch im wesentlichen dazu dienen, Zwischenprodukte zu erzeugen, die erst nach Zwischenlagerung und möglicherweise längerer Zeit weiterverarbeitet werden sollen. Bei dem vorbekannten Expander ist es also erst nötig, die Zwischenprodukte zu kühlen und zu trocknen. Für die anschließende Weiterverarbeitung muß dann das Material wieder erwärmt und befeuchtet werden.

Bei dieser Konditionierung soll eine Verdichtung zur Erzielung eines höheren Schüttgewichtes und ein besserer Zellenaufschluß bzw. Zellenaufbruch, um besser extrahieren zu können, erreicht werden.

Überraschenderweise läßt sich nun der vorbekannte Expander auch für die Konditionierung von Material für das Verpressen von Pellets verwenden, und zwar auch unmittelbar vor der Verpressung, obwohl dort ganz andere Ziele mit der Konditionierung verfolgt werden. So sollen bei dem der Verpressung vorgeschalteten Konditioniervorgang beim erfindungsgemäßen Verfahren die Stärke durch thermische Behandlung modifiziert werden, die Rohfasern sollen erweicht werden und die Proteine sollen angelöst werden, um Bindungskräfte zu aktivieren. Durch die Erfindung wurde dabei überraschenderweise herausgefunden, daß auch diese Ziele durch das vorbekannte Konditionierverfahren erreicht werden können. Es ist nämlich eine optimale Anpassung der Arbeitsgeschwindigkeiten von Expander und Pelletpresse möglich. Wird z.B. die Geschwindigkeit der Pelletpresse größer, so kann auch die Durchsatzgeschwindigkeit im Expander erhöht werden. Damit trotzdem noch eine gute Konditionierung erfolgt, kann gleichzeitig z.B. der hydrostatische Druck des Fluids erhöht werden und mehr Dampf zugegeben werden. Aufgrund der höheren Temperatur, die so zu erreichen ist, findet die gewünschte Konditionierung dann schneller statt.

Ein weiteres überraschendes Ergebnis ist es, daß gleichzeitig durch das erfindungsgemäße Konditionierverfahren auch Keime abgetötet werden und das Futtermittel dadurch hygienisiert oder sterilisiert wird. Auch diese überraschende Wirkung wird durch das vorbekannte Verfahren weder vorweggenommen noch in irgend einer Weise nahegelegt

Das als Expander wirkende, erfindungsgemäß verwendete Expansionsgerät hat also den Vorteil, daß der Druck und auch die Temperatur regelbar ist. Dies ist sehr wichtig, damit ganz genau und gezielt die Konditionierungswirkung eingestellt werden kann, durch die bei Futtermitteln die physiologischen Eigenschaften gezielt beeinflußt oder verändert werden sollen. Auch der Durchsatz ist regelbar, was bei vorgeschalteten Pelletpressen oder Extrudern nicht oder zumindest nicht in ausreichendem Maße möglich ist. Der weitere Vorteil, daß das Expansionsgerät unmittelbar der Pelletpresse vorgeschaltet werden kann, besteht darin, daß das den Expander verfassende Material nicht erst gekühlt und getrocknet und anschließend wieder erwärmt und befeuchtet werden muß, sondern daß es ohne Zeitverlust und Qualitätsverlust sofort weiterverarbeitet werden kann.

Der letztgenannte Vorteil und weitere der obenerwähnten Vorteile treten dabei nicht nur bei einem Expander mit regelbarem Querschnitt auf, sondern auch dann, wenn beim Verfahren konstante Querschnitte verwendet werden.

Es ist aber nicht unbedingt erforderlich, für die Erfindung den genannten Expander zu verwenden. Vielmehr kann, wie dies bereits weiter oben erwähnt wurde, auf die Dampfzuführungsleitungen verzichtet werden, wenn das Material auf andere Weise auf genügend hohe Temperaturen erwärmt wird.

Das Konditionieren kann bei Temperaturen von bis zu 170°C und kontrollierter Feuchtigkeit durchgeführt werden. Dabei kann die Konditionierung selektiv so durchgeführt werden, daß einerseits schädliche Enzyme zerstört oder unwirksam gemacht werden, andererseits aber doch wertvolle Stoffe wie z.B. Proteine in ihrer Qualität nicht leiden.

In vielen Fällen wird eine Mischung verschiedener Stoffe zu Futtermitteln verarbeitet. In diesem Fall kann es zweckmäßig sein, nur einen Teilstrom des zu verpressenden Materials im Expander zu konditionieren. Dies wird z.B. der Fall sein, wenn ein Teilstrom bei hohen Temperaturen und Drucken bearbeitet bzw. konditioniert werden muß, um z.B. schädliche Enzyme zu zerstören. Ein anderer Teil kann einer schonenderen konventionellen Konditionierung ausgesetzt werden, damit die Stoffe dieses Teilstroms nicht geschädigt werden. So würde man insbesondere z.B. wertvolle Proteine oder Vitamine nicht durch den Expander leiten. In vielen Fällen braucht ein Teilstrom des Materials gar nicht konditioniert werden, wenn das Material bereits in für das Pelletieren bzw. für die Zugabe zum Hauptmaterial geeigneter Form vorliegt.

Ob das gesamte Material oder nur ein Teilstrom durch den Expander geleitet und dort konditioniert wird, hängt von den Eigenschaften der einzelnen Materialkomponenten ab sowie von der Tatsache, ob diese Materialkomponenten getrennt vorliegen oder bereits vorher gemischt worden sind.

Eine vorteilhafte Ausführungsform einer Vorrichtung der Erfindung zeichnet sich dadurch aus, daß Konditioniervorrichtung und Pelletpresse direkt zusammengebaut sind, so daß das konditionierte Material direkt in die Pelletpresse gelangen kann, z.B. in die Pelletpresse hineinfallen kann, wenn die Konditioniervorrichtung oberhalb der Presse angeordnet ist. Die Konditioniervorrichtung kann dabei als Austrittsöffnung einen Ringspalt, einen Flachspalt oder andere Arten von verengten Austrittsöffnungen haben. Die Pelletpresse kann eine FIachmatrizenpresse oder eine Ringmatrizenpresse sein. Sind Konditioniervorrichtung und Pelletpresse räumlich getrennt, so wird zweckmäßigerweise zwischen beiden Pressen ein Stetigförderer vorgesehen, insbesondere ein Schneckenförderer, ein Kratzbodenförderer, eine pneumatische Förderanlage, ein Gurtförderer oder ein anderer an sich bekannter Förderer. Auch mehrere solcher Förderer können hintereinander angeordnet werden, falls dies die räumliche Anordnung erfordert

Insbesondere dann, wenn das Material die Konditioniervorrichtung strangförmig verläßt, kann zwischen Konditioniervorrichtung und Pelletpresse eine Zerkleinerungsvorrichtung vorgesehen werden, die das Material so zerkleinert, daß es vorteilhaft in der Presse verarbeitet werden kann.

Die Erfindung wird im folgenden anhand von vorteilhaften Ausführungsformen unter Bezugnahme auf die beigefügten Zeichnungen beschrieben. Es zeigen:
- Fig. 1: den prinzipiellen Aufbau einer an sich bekannten Pelletpresse;
- Fig. 2: eine Ausführungsform der erfindungsgemäßen Vorrichtung mit einer Flachmatrizenpresse;
- Fig. 3: eine andere vorteilhafte Ausführungsform mit einer Ringmatrizenpresse und
- Fig. 4: eine andere Art der Verbindung zwischen Konditioniervorrichtung und Pelletpresse.

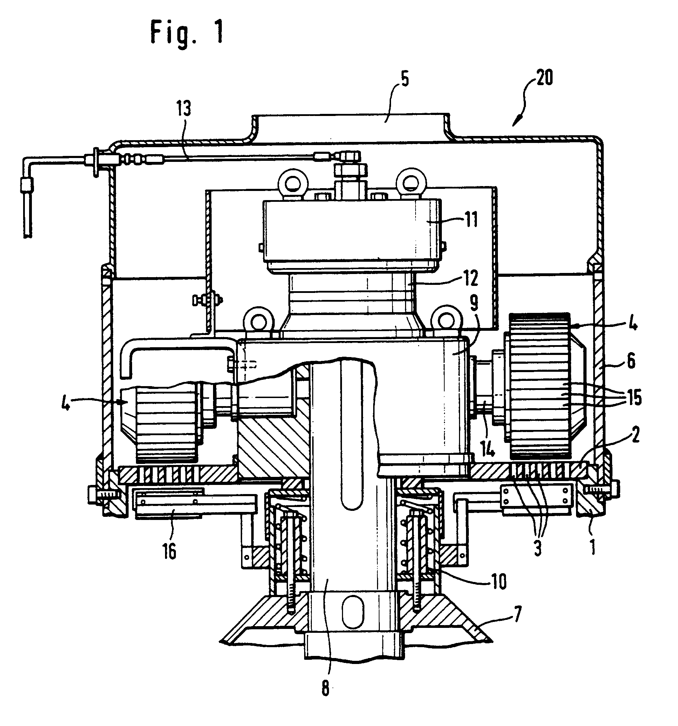

Zum besseren Verständnis der Erfindung soll zunächst unter Bezugnahme auf Fig. 1 der bekannte Aufbau einer Pelletpresse 20 beschrieben werden.

Auf einem Maschinengestell 1 ist eine Flachmatrize 2 befestigt, die mit Bohrungen 3 versehen ist, durch die das durch Kollerrollen 4 zusammengepreßte Material hindurchgedrückt wird. Das Ausgangsmaterial, das zum Beispiel staubförmig sein kann, wird dabei durch die Öffnung 5 im Gehäuse 6 von oben her eingefüllt. Das Gehäuse 6 ist ebenfalls am Maschinengestell 1 befestigt.

Auf in der Figur nicht gezeigte Weise ist am Maschinengestell 1 ein Drehteller 7 drehbar befestigt, der mit einem entsprechenden nicht gezeigten Antrieb in Verbindung steht. Dieser Drehteller 7 mit einer damit verbundenen Königswelle 8 kann durch den betrieb um eine in Figur 1 senkrechte Achse gedreht werden.

Auf der Königswelle 8 ist ein Kollerkopf 9 so befestigt, daß er relativ zur Königswelle 8 unverdrehbar ist (sich also nur mit derselben drehen kann), jedoch axial auf der Königswelle 8 verschiebbar und mit Hilfe von Federn 10, einer Hydraulikmutter 11 und Distanzringen 12 durch Hineinpressen oder Ablassen von Hydraulikfluid über die Leitung 13 in die Hydraulikmutter 11 in seiner Höhe einstellbar ist. Die Kollerrollen sind auf Achsen 14 so am Kollerkopf 9 befestigt, daß sie sich um diese horizontalen Achsen frei drehen können und damit bei Drehung des Kollerkopfes 9 um seine vertikale Achse auf der Matrize beziehungsweise der Materialschicht abrollen. Sie sind noch mit Riffelungen beziehungsweise Materialaufnahmenuten 15 versehen, um den Pressvorgang zu erleichtern.

Das gepreßte Material tritt in Strangform durch die Löcher 3 der Matrize 2 und wird durch Abbrecheinrichtungen 16, die mit dem Kollerkopf rotieren, in Abschnitte unterteilt.

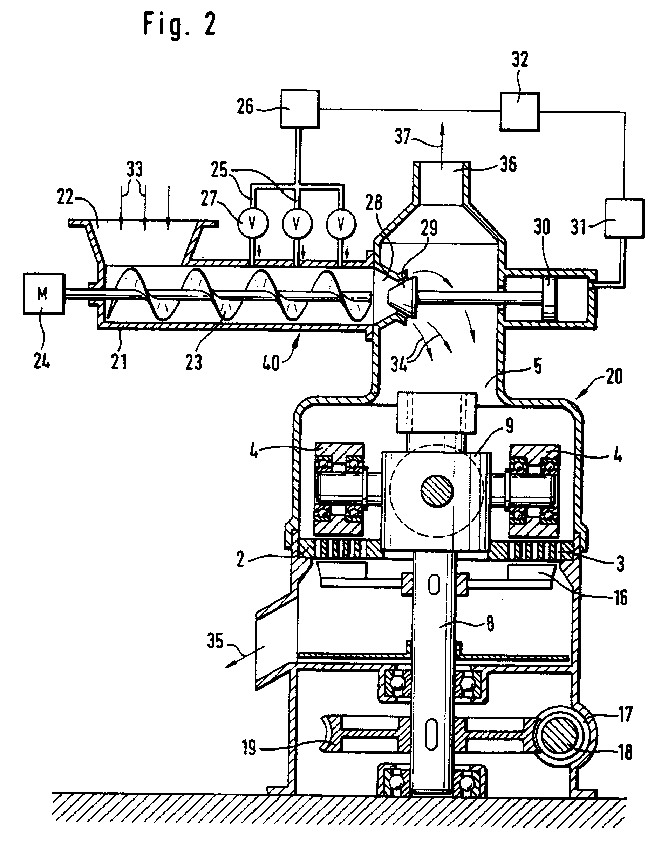

Fig. 2 zeigt eine Ausführungsform der erfindungsgemäßen Vorrichtung, bei der oberhalb der Pelletpresse 20 eine Konditioniervorrichtung 40 angeordnet ist. Diese Konditioniervorrichtung weist ein zylindrisches Gehäuse 21 und eine Einfüllöffnung 22 auf. Im Gehäuse 21 ist ein Schneckenförderer 23 vorgesehen, der durch einen Motor 24 angetrieben werden kann.

In die Wand des Gehäuses 21 führen mehrere Leitungen 25, durch die Dampf von einer Dampfquelle 26 eingeführt werden kann. Die Dampfzufuhr durch die Leitungen 25 kann dabei durch Ventile 27 durch in der Figur nicht gezeigte Einrichtungen gesteuert oder geregelt werden.

Am Ausgang weist das Gehäuse 21 eine Verengung 28 auf, die mit einem konusförmigen Ventilteller 28 ganz oder teilweise verschlossen werden kann. Der Konusteller 29 wird dabei durch einen Hydraulikkolben 30 gegen die Öffnung 28 gedrückt, um einen Gegendruck durch das Material zu erzeugen. Der Hydraulikdruck wird dabei durch eine Einrichtung 31 erzeugt, die wiederum durch eine Steuer- oder Regeleinheit 32 gesteuert wird. Diese Steuer- oder Regeleinheit 32 wirkt auch auf die Dampferzeugungseinheit 26. Im unteren Teil der Fig. 2 ist noch gezeigt, daß die Pelletpresse 20 durch einen Motor 17 angetrieben wird, der ein Schneckenzahnrad 18 antreibt, das wiederum einen fest mit der Königswelle 8 verbundenen Zahnkranz 19 antreibt.

Die Vorrichtung arbeitet wie folgt. Das zu verpressende Material wird in Richtung der Pfeile 33 in die Einfullöffnung 22 geführt und dabei von der durch den Motor 24 angetriebenen Schnecke 23 nach rechts gegen die Öffnung 28 gedrückt. Durch die Dampfleitungen 25 wird Dampf eingeführt, um das Material zu erhitzen. Da sich in der Nähe des Ausgangs der Schnecke ein Materialpfropf bildet, ist hier der Druck höher als der Atrrosphärendruck, so daß Temperaturen des Materials von über 100°C erzeugt werden können, bei denen das Material konditioniert wird.

Das so konditionierte Material fällt dann in Richtung der Pfeile 34 in die Pelletpresse 20, wird dort verpreßt und verläßt dieselbe in Richtung des Pfeiles 35. Überschüssiger Dampf, der mit dem Material aus der Konditioniereinrichtung 40 austritt, kann durch eine Brüdenöffnung 36 in Richtung des Pfeiles 37 die Vorrichtung verlassen.

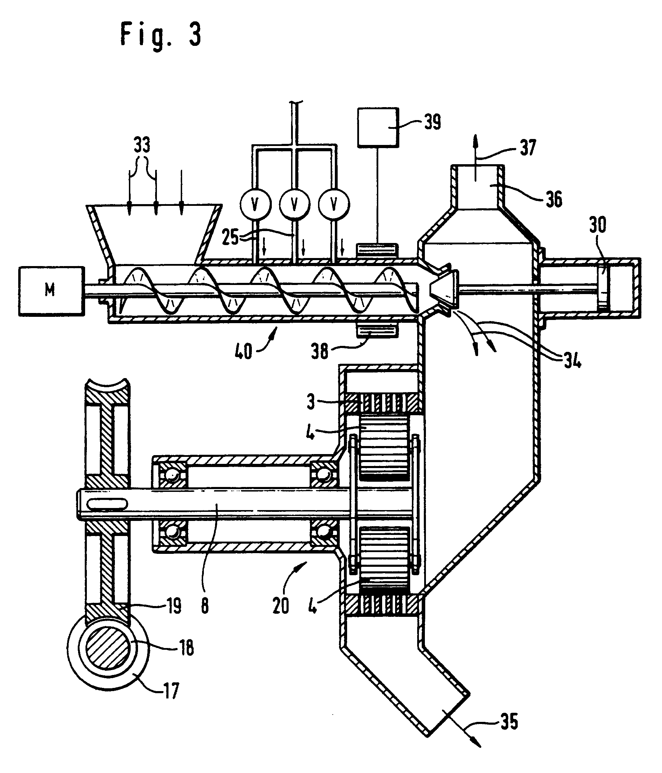

In der Ausführungsform der Fig. 3 ist die Pelletpresse 20 eine Ringmatizenpresse, in der Kollerrollen 4 auf einer ringförmigen Matrize 3 abrollen. Bei dieser Ausführungsform ist noch eine externe Heizeinrichtung 38 gezeigt, mit der die Konditioniervorrichtung 40 von außen mit Hilfe einer Energiequelle 39 geheizt werden kann. Die Heizung kann dabei mit Hilfe von Dampf, induktiv, durch Widerstandsheizung oder andere bekannte Verfahren erfolgen. Es könnten selbstverständlich auch im Inneren der Konditioniervorrichtung 40 Heizelemente vorgesehen sein. Wenn solche Heizelemente 38 vorgesehen sind, kann unter Uständen auch auf die Dampfzuführungsleitungen 25 verzichtet werden.

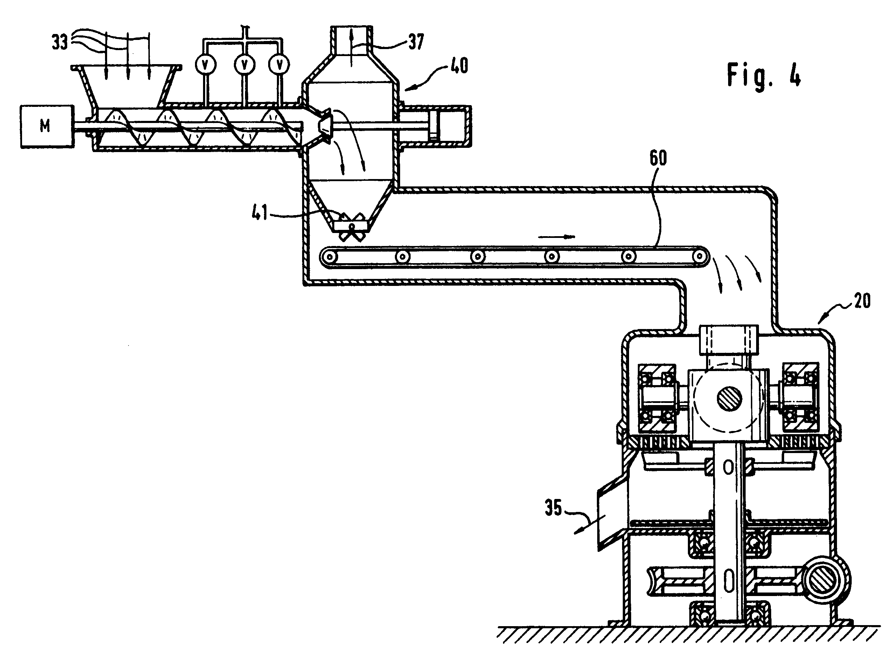

Bei der Ausführungsform der Fig. 4 sind Konditioniervorrichtung 40 und Pelletpresse 20 in einem Abstand voneinander angeordnet. Zwischen beiden Vorrichtungen befindet sich ein Gurtförderer 60, der durch einen nichtgezeigten Motor angetrieben ist. In Fig. 4 ist noch eine Zerkleinerungseinrichtung 41 andgedeutet, durch die das aus der Konditioniervorrichtung 40 austretende stranförmige Material zerkleinert werden kann, damit es in die Pelletpresse 20 in einen Zustand eintritt, der optimale Verpressung gestattet

Wie bereits erwähnt, kann die Konditioniergeschwindigkeit durch Regelung der Drehzahl des Motors 24 der Konditioniervorrichtung 40 der Verarbeitungsgeschwindigkeit der Pelletpresse 20 angepaßt werden. Damit trotzdem die Konditionierung unter günstigen Bedingungen stattfinden kann, kann dann die Dampfzugabe in die Konditioniervorrichtung entsprechend geregelt werden.

Bei Vergleichsversuchen wurden verschiedene Futtermittel mit und ohne die Konditionierungsvorrichtung verpreßt. Die Aufenthaltsdauer in der Konditionierungsvorrichtung 40 betrug dabei 2 Sekunden, die Temperatur des Gehäuses 21 war 122°C, während der Dampfdruck in der Konditioniervorrichtung 40 (Expander) 30 bar betrug. Die Ergebnisse waren die folgenden.

| Futtermittel | | Abrieb n. Pfost | Kahl-Härte | Keimzahl (Keime/g) |
|---|---|---|---|---|
| Schweinemastfutter | | | | |
| | ohne Expander | 6,0 % | 5,0 kp | 67,0 Mio. |
| | mit Expander | 1,4 % | 12,0 kp | 0,002 Mio. |

| Forellenfutter | | | | |
|---|---|---|---|---|
| | ohne Expander | 25,0 % | 1,0 kp | |
| | mit Expander | 2,4 % | 8,0 kp | |

| Geflügelfutter | | | | |
|---|---|---|---|---|
| | ohne Expander | 6,4 % | 1,0 kp | |
| | mit Expander | 2,6 % | 2,09 kp | |

Wie aus der Tabelle zu entnehmen ist, sind die erzeugten Pellets bei Verwendung des Expanders nicht nur wesentlich abriebfester und weisen auch eine höhere Kahl-Härte auf. Es wird vielmehr auch die Keimzahl drastisch gesenkt. Auf diese Weise können z.B. Salmonellen, die im Rohmaterial enthalten sind, wirkungsvoll abgetötet werden.

Zusammenfassend kann gesagt werden, daß durch das erfindungsgemäße Verfahren eine besser und einfacher sowie kostengünstiger durchzuführende Konditionierung ermöglicht wird. Bei einer anderen Ausführungsform der Erfindung wird eine neue Verwendung eines bekannten Expanders geschaffen, durch die in überraschender und sehr vorteilhafter Weise eine gute Konditionierung von Materialien für Pelletpressen ermöglicht wird, welche letzten Endes zu einer besseren Futterwertausnutzung führt.

## Patentansprüche

1. Verfahren zum Pelletieren von Futtermitteln, bei dem das zu pelletierende Material oder Materialgemisch vor dem Pelletieren in einem Reaktionsbehälter bei erhöhter Temperatur konditioniert wird, wobei das Material im Reaktionsbehälter durch die Wirkung eines Förderelementes komprimiert wird, so daß sich am Austragsende des Reaktionsbehälters ein auf das Material oder Materialgemisch wirkender Arbeitsdruck einstellt, und wobei dieser auf diese Materialmenge wirkende Druck anschließend durch Entspannung auf einen verminderten, unterhalb dieses Drucks liegenden Entspannungsdruck, abgesenkt wird, dadurch gekennzeichnet, daß das Konditionieren bei Temperaturen von bis zu 170°C, insbesondere 150°C durchgeführt wird, und daß das Pelletieren nach Entspannen auf Atmosphärendruck in einer Pelletpresse erfolgt.

2. Verfahren nach Anspruch 1, dadurch gekennzeichnet, daß dem Material im komprimierten Bereich ein unter Druck stehendes gasförmiges oder flüssiges Fluid zugeführt wird.

3. Verfahren nach Anspruch 2, dadurch gekennzeichnet, daß als Fluid Wasserdampf verwendet wird.

4. Verfahren nach einem der Ansprüche 1 bis 3, dadurch gekennzeichnet, daß das Konditionieren bei Temperaturen von ca. 120°C durchgeführt wird.

5. Verfahren nach einem der Ansprüche 1 bis 4, dadurch gekennzeichnet, daß das Material beim Konditionieren einen Feuchtigkeitsanteil von ca. 10-30 Gewichts prozent aufweist.

6. Verfahren nach einem der Ansprüche 1 bis 5, dadurch gekennzeichnet, daß nur ein Teilstrom des zu verpressenden Materials im Reaktionsbehälter konditioniert wird.

7. Verfahren nach einem der Ansprüche 1 bis 6, dadurch gekennzeichnet, daß ein Reaktionsgerät verwendet wird, das sich auszeichnet durch ein als Anpresskopf ausgebildetes, die Austrittsöffnung des Reaktionsbehälters während der Aufbauphase des Arbeitsdrucks (P) verschließendes oder zumindest einengendes Ventilelement, das an ein Gegendruckelement angeschlossen ist.

8. Verfahren nach Anspruch 7, dadurch gekennzeichnet, daß ein Gegendruckelement verwendet wird, dessen Druckwirkung (P'') dem Behälterdruck (P) so lange entgegenwirkt, bis die Forderung P > P'' erfüllt ist, so daß sich der Anpresskopf von der Behälteraustrittsöffnung trennt und nach Einstellung dieser Forderung bzw. nach erstmaligem Auftreten der Beziehung P < P'' der Anpresskopf durch den nunmehr gegenüber (P) höheren Gegendruck (P'') wieder in Schließposition gebracht wird und sich ein Gleichgewicht P = P'' einstellt, das einem konstanten Materialaustritt über den zwischen zurückgezogenem Anpresskopf und Behälterendflansch gebildeten Austrittsspalt zur Folge hat.

## Claims

1. Method for pelletizing feed-stuffs, in which the material or material mixture to be pelletized is treated in a reaction container at increased temperature before pelletizing, the material being compressed by the action of a conveying member in the reaction container, so that a working pressure acting on the material or material mixture is pre-set at the discharge end of the reaction container and this pressure acting on this quantity of material then being lowered by a pressure release to a reduced release pressure lying below this pressure, characterised in that the treatment is carried out at temperatures of up to 170°C, in particular 150°C and that after the pressure release the pelletizing takes place at atmospheric pressure in a pellet press.

2. Method according to Claim 1, characterised in that a pressurised gaseous or liquid fluid is supplied to the material in the compressed region.

3. Method according to Claim 2, characterised in that water vapour is used as the fluid.

4. Method according to one of Claims 1 to 3, characterised in that the treatment is carried out at temperatures of approximately 120°C.

5. Method according to one of Claims 1 to 4, characterised in that at the time of treatment, the material has a moisture content of approximately 10-30% by weight.

6. Method according to one of Claims 1 to 5, characterised in that only a partial stream of the material to be pressed is treated in the reaction container.

7. Method according to one of Claims 1 to 6, characterised in that a reaction apparatus is used, which is distinguished by a valve member constructed as a pressure head closing or at least reducing the outlet opening of the reaction container during the build-up stage of the working pressure (P), which valve member is connected to a counter-pressure member.

8. Method according to Claim 7, characterised in that a counterpressure member is used, whereof the pressure effect (P'') opposes the container pressure (P) until the requirement P > P'' is fulfilled, so that the pressure head separates from the container outlet opening and after setting this requirement or after the first appearance of the relationship P < P'', the pressure head is brought back into the closing position by the counter-pressure (P'') which is now higher in comparison with (P) and an equilibrium P= P'' is established, which results in a constant escape of material by way of the outlet gap formed between the retracted pressure head and the end flange of the container.

## Revendications

1. Procédé de transformation en boulettes d'aliments pour animaux, dans lequel la matière ou le mélange de matières à transformer en boulettes est conditionné à température élevée dans un récipient de réaction avant sa transformation en boulettes, la matière contenue dans le récipient de réaction étant comprimée sous l'action d'un élément transporteur de sorte qu'il s'établisse, à l'extrémité de sortie du récipient de réaction, une pression de travail qui agit sur la matière ou le mélange de matières, et cette pression exercée sur cette quantité de matière étant ensuite abaissée par détente à une pression de détente réduite, se situant au-dessous de cette pression, caractérisé en ce que le conditionnement est exécuté à des températures allant jusqu'à 170°C, en particulier jusqu'à 150°C, et en ce que la transformation en boulettes est effectuée, après une détente à la pression atmosphérique, dans une presse à boulettes.

2. Procédé selon la revendication 1, caractérisé en ce qu'un fluide gazeux ou liquide sous pression est envoyé sur la matière dans la zone comprimée.

3. Procédé selon la revendication 2, caractérisé en ce que de la vapeur d'eau est utilisée comme fluide.

4. Procédé selon l'une quelconque des revendications 1 à 3, caractérisé en ce que le conditionnement est effectué a des températures d'environ 120°C.

5. Procédé selon l'une quelconque des revendications 1 a 4, caractérisé en ce que la matière présente, lors du conditionnement, une teneur en humidité d'environ 10 à 30% en poids.

6. Procédé selon l'une quelconque des revendications 1 à 5, caractérisé en ce qu'il n'est conditionné, dans le récipient de réaction, qu'un courant partiel de la matière à comprimer.

7. Procédé selon l'une quelconque des revendications 1 à 6, caractérisé en ce qu'on utilise un appareil de réaction qui se caractérise par un élément de valve qui, réalisé sous forme de tête de contact sous pression, ferme ou au moins rétrécit l'orifice de sortie du récipient de réaction pendant la phase d'établissement de la pression de travail (P) et qui est raccordé à un élément de contre-pression.

8. Procédé selon la revendication 7, caractérisé en ce qu'il est fait usage d'un élément de contre-pression dont l'effet de pression (P'') agit en sens inverse de la pression du récipient (P) jusqu'à ce que la condition P > P'' soit satisfaite, de sorte que la tête de contact sous pression se sépare de l'orifice de sortie du récipient, et qu'après l'établissement de cette condition ou après que la relation P < P'' intervient pour la première fois, la tête de contact sous pression est ramenée en position de fermeture par la contre-pression (P'') désormais plus élevée que (P) et il s'établit un équilibre P = P'' qui a pour conséquence une sortie constante de matière par la fente de sortie formée entre la tête de contact sous pression attirée en arrière et la tubulure d'extrémité du récipient.
